# EUROPÄISCHE PATENTSCHRIFT

(11) **EP 2 393 643 B1**
(45) Veröffentlichungstag und Bekanntmachung des Hinweises auf die Patenterteilung: **02.10.2019**
(21) Anmeldenummer: 10701480.5
(22) Anmeldetag: 27.01.2010
(51) Int. Cl.: B29C 44/34, B29C 44/46, B29C 44/60, B05C 5/02

(54) **HOCHDRUCKVORRICHTUNG**
High pressure device
Dispositif haute pression

(30) Priorität: 05.02.2009 EP 09001610
(43) Veröffentlichungstag der Anmeldung: 14.12.2011
(73) Patentinhaber: Covestro Deutschland AG, 51373 Leverkusen (DE)
(72) Erfinder: RÜB, Thomas, 51375 Leverkusen (DE); KUENZEL, Uwe, 51377 Leverkusen (DE)
(74) Vertreter: Levpat
(86) Internationale Anmeldenummer: PCT/EP2010/000461
(87) Internationale Veröffentlichungsnummer: WO 2010/089041

(56) Entgegenhaltungen:
- EP-A- 1 857 248
- EP-B- 1 299 443
- WO-A-03/064236
- US-A1- 2004 048 941

## Beschreibung

Die Erfindung betrifft eine Hochdruckvorrichtung zum gegebenenfalls gleichzeitigen und gegebenenfalls gleichmäßigen Auftrag einer schäumbaren Reaktionsmischung auf eine Oberfläche, ein Verfahren zur Herstellung einer schäumbaren Reaktionsmischung, eine Vorrichtung zur Herstellung von Sandwich-Verbundelementen sowie ein Verfahren zur Herstellung von geschäumten Sandwich-Verbundelementen.

Im Sinne der vorliegenden Erfindung ist unter Hochdruckzuleitung der Bereich der Zuleitung zu verstehen, die die letzte Pumpe mit dem Mischkopf verbindet. Die letzte Pumpe wird im Sinne der vorliegenden Erfindung als Hochdruckdosierpumpe bezeichnet. Unter Vordruckzuleitung der Bereich der Zuleitung zu verstehen, der strömungstechnisch vor der Hochdruckdosierpumpe liegt.

Im Sinne der vorliegenden Erfindung ist unter Vordruckseite strömungstechnisch die Seite vor der Hochdruckdosierpumpe zu verstehen und unter Hochdruckseite die Seite, die strömungstechnisch nach der Hochdruckdosierpumpe liegt.

Unter Standzeit im Sinne der vorliegenden Erfindung ist der Zeitraum zu verstehen, in der mit der Vorrichtung ein schäumbares Reaktionsgemisch erzeugt werden kann, ohne dass eine Reinigung der Auftragssystems (d.h. Verteilerkopf und Schläuche) erforderlich ist.

Es besteht seit langem der Bedarf an Vorrichtungen für die kontinuierliche Herstellung von Sandwich-Verbundelementen bei denen man die Produktionsgeschwindigkeit auf Geschwindigkeiten von mehr als 15 m/min, insbesondere von mehr als 40 m/min, noch bevorzugter von mehr als 60 m/min, erhöhen kann.

Zur kontinuierlichen Herstellung von Sandwich-Verbundelementen sind bisher aus dem Stand der Technik oszillierende Mischköpfe bekannt. Hierbei führt der Mischkopf eine oszillierende Bewegung über die Breite einer unteren Deckschicht aus und trägt das noch flüssige Reaktionsgemisch mittels Gießharke oder Zungen-/Löffeldüse, die im rechten Winkel zum Mischkopf und parallel zu unteren Deckschicht angeordnet ist, auf die untere Deckschicht auf. Der Mischkopf ist an einer Führungsschiene, dem so genannten Portal, über der unteren Deckschicht befestigt und wird mit Hilfe von Elektromotoren beschleunigt und vor den Umkehrpunkten abgebremst. Die Verschäumungs-Rohstoffe werden dem Mischkopf über Schlauchleitungen zugeführt. Des Weiteren führen teilweise Hydraulik- oder Pneumatikschläuche zum Mischkopf. Die Verschäumungs-Rohstoffe werden über Düsen in den Mischkopf eingebracht und vermischt. Das Reaktionsgemisch fließt danach in die Gießharke und tritt an den regelmäßig angebrachten Bohrungen aus. Durch die Länge der Gießharke und deren Bohrungen, sowie der oszillierenden Bewegung des Mischkopfs, wird eine gleichmäßige schräg zur Förderrichtung liegende Verteilung des Reaktionsgemisches erzielt. Nach Aufbringung schäumt das Reaktionsgemisch auf und steigt bis zur oberen Deckschicht. Bei dem Aufschäumprozess verklebt es die beiden Deckschichten, bevor der Schaum erstarrt und aushärtet.

Dieses Produktionsverfahren ist fertigungstechnisch hinsichtlich der Produktionsgeschwindigkeit limitiert. Auch wenn ausreichend starke Motoren, Führungsschienen, Schläuche, Mischköpfe und Gießharken oder Zungen-/Löffeldüsen verwendet würden, würde das Reaktionsgemisch bedingt durch zu hohe Fliehkräfte an den Umkehrpunkten über die Seiten der Deckschichten hinausgetragen werden. Nach dem Stand der Technik können Produktionsgeschwindigkeiten von über 15 m/min bei der kontinuierlichen Herstellung von Sandwich-Verbundelementen mit dieser Auftragstechnik nicht erreicht werden.

Hinlänglich bekannt ist die Technik, mittels stehender Mischkopftechnologie und starren Austrittsystemen die Produktionsgeschwindigkeit auf 60 m/min zu erhöhen. Dieses Verfahren wird US-Technologie genannt. Diese US-Technologie (Schnellläufer) besteht im Wesentlichen aus drei gleichen Dosierlinien mit separater Zuführung und separaten Mischköpfen und Austrittsystemen. Diese Technologie verfügt jedoch nicht über nur einen Verteilerkopf, sondern benötigt nachteiligerweise mehrere Verteilerköpfe. Dieses Verfahren hat weiterhin den Nachteil, dass das jeweils austretende Reaktionsgemisch aus den einzelnen Mischköpfen auch unterschiedlichen physikalischen Bedingungen bezüglich Druck und Temperatur unterliegen kann, was sich im jeweiligen erhaltenen Schaum durch Produktqualitätsminderungen wie beispielsweise ungleichmäßige Oberfläche, kleinere Zellen, unterschiedliche Wärmeleitfähigkeitswerte aufgrund punktuell unterschiedlicher Reaktionskinetik, bemerkbar macht.

EP 1 857 248 A2 löst dieses Problem dadurch, dass nicht jede Austrittleitung über einen separaten Mischkopf verfügt. Vielmehr ist nur ein Mischkopf vorgesehen, über den mehrere Austrittleitungen gespeist werden. Bei dem in EP 1 857 248 A2 beschriebenen System handelt es sich um bei für die Herstellung von PUR-Schäumen üblichen Drücken arbeitenden Vorrichtungen, bei denen einen Druck von 6 bar nicht überschritten wird; diese gestatten Produktionsgeschwindigkeiten von 15 bis maximal 60 m/min.

WO 03/064236 A1 befasst sich mit der Aufgabe, die Zellenzahl des Schaums in weiten Grenzen zu steuern und die Größenverteilung der Zellen im Schaum einzustellen, und offenbart ein Verfahren zur Herstellung von Polyurethan-Schaum durch vermischen einer Isocyanatkomponente mit einer Polyolkomponente in einem Mischaggregat in Anwesenheit eines gelösten Schäummittels und Luft und/oder Stickstoff als Blasenkeimbildner, wobei der Blasenkeimbildner durch Feindispergierung und Druckerhöhung auf der Niederdruckseite erfolgt. Im Hinblick auf den Stand der Technik bestand die Aufgabe der vorliegenden Erfindung darin, Vorrichtungen bzw. Verfahren zu entwickeln, mit welchen sich die Produktionsgeschwindigkeit weiter steigern lässt und wobei mit nur einem Verteilerkopf gearbeitet wird. Eine weitere Aufgabe lag darin, die Oberfläche (vor allen Dingen hinsichtlich ihrer Homogenität) der mit solchen Vorrichtungen/Verfahren erhältlichen Schaumstoffe ebenso zu verbessern wie die oben definierten Produktqualitäten. Eine weitere Aufgabe der vorliegenden Erfindung bestand darin zu gewährleisten, dass das Auftragssystem (d.h. der Verteilerkopf und die Schläuche) eine gegenüber dem aus EP 1 857 248 A2 bekannten Verfahren verlängerte Standzeit aufweist.

Diese Aufgabe wird in einer ersten Ausführungsform gelöst durch eine Vorrichtung zum Auftrag von schäumbaren Reaktionsmischungen umfassend
- einen Mischkopf,
- einen strömungstechnisch hinter dem Mischkopf liegenden Verteilerkopf,
- mindestens drei an dem Verteilerkopf angebrachte Austrittleitungen, die strömungstechnisch hinter dem Verteilerkopf angebracht sind,
- eine Hochdruckzuleitung einer Komponente A zum Mischkopf,
- eine Hochdruckzuleitung einer Komponente B zum Mischkopf,
- mindestens eine Zuleitung für ein unter erhöhtem Druck stehendes inertes Gas, wobei das inerte Gas vor der Einleitung in die Komponente A oder die Komponente B auf einen Druck von > 150 bar komprimiert wird und einen Druck aufweist, der höher ist als der Druck der Komponente, in die es eingegeben wird,
- mindestens einen Statikmischer, der strömungstechnisch vor dem Mischkopf angeordnet ist, zur innigen Durchmischung des unter erhöhtem Druck stehenden inerten Gases und der jeweiligen Komponente,
- mindestens eine Mess- und Regeleinheit zur Einstellung der gewünschten Drücke der Komponenten A und B am Mischkopf.

Aus dem Stand der Technik sind die nachfolgend genannten Verfahren bekannt, um ein Gas in den Polyolstrom zu dosieren: Es wird ein Vordruck im Tanklager mittels einer Pumpe (beispielsweise einer Schraubenspindel oder Zahnrad) erzeugt und liegt in der Regel zwischen drei und acht bar (max. 10bar). Es besteht die Möglichkeit, die Gasbeladung auf der Vordruckseite zu erzeugen. Hierzu ist die Gasbeladungseinheit in der Vordruckseite montiert und mischt das Gas über einen sich schnell drehenden Hohlrührer definiert in das Polyol. Der Gasanteil ist bei normaler Produktion nicht höher als 1 NL/min (Normliter pro Minute; ein Normliter ist das Volumen eines Gases, das ein Gas bei einem Druck pₙ von 1,01325 bar, einer Luftfeuchtigkeit von 0 % (trockenes Gas) und einer Temperatur von Tₙ = 273,15 K einnimmt) und beeinflusst die Genauigkeit der Dosierpumpe nicht. Nachteil ist, dass es bei höherem Gasanteil zu Kavitation in der Dosierpumpe kommen kann. Das hat zur Folge, dass die Dosierpumpe ungenau dosiert und der Verschleiß um ein vielfaches höher ist. Auch ist es möglich, die Gasbeladung auf der Vordruckseite mit Druckerhöhungspumpe zu bewirken. Dies beugt der Kavitation vor, indem eine Druckerhöhungspumpe zwischen Gasbeladungseinheit und Dosierpumpe eingebaut ist, welche den Vordruck auf bis zu 30 bar erhöht. Das Gesamtvolumen von der Stelle der Gasbeladung bis zum Mischkopf beträgt bei diesen Vorrichtungen im Allgemeinen 20 - 30 dm³. Die Standzeit bei einer entsprechenden Vorrichtung gemäß Stand der Technik ohne Gasbeladung oder einer Gasbeladung auf der Niederdruckseite beträgt bei der Herstellung von schäumbaren Reaktionsmischungen weniger als eine Stunde.

Bei der Vorrichtung gemäß der vorliegenden Erfindung erfolgt die Dosierung des Gases (beispielsweise in einen Statikmischer) auf der Hochdruckseite. Dies hat den Vorteil, dass bei Schäumbeginn das Gas früher (in der Regel etwas 10 x schneller) im Auftragssystem (d.h. im austretenden aufschäumenden Reaktionsgemisch und in den Schläuchen) vorhanden ist im Vergleich zu den zuvor beschriebenen, aus dem Stand der Technik bekannten Verfahren mit einer Gasbeladung auf der Vordruckseite. Das Gesamtvolumen vom Statikmischer bis zum Mischkopf der erfindungsgemäßen Vorrichtung beträgt bevorzugt weniger als 2,0 dm³. Dies hat den überraschenden Vorteil, dass sich die Schläuche beim Schäumprozess nicht zusetzen. Besonders vorteilhaft ist es, wenn die Hochdruckseite bei einem Druck von 150 bis 250 bar betrieben wird und das Gas vor dem Statikmischer auf einen Druck verdichtet wird (beispielsweise mittels eines Kompressors), der mindestens 5 bar über dem Druck der Hochdruckseite liegt.

Durch Anwendung der erfindungemäßen Vorrichtung, bei der Gas auf der Hochdruckseite eingebracht wird, hat das Auftragssystems (Verteilerkopf und Schläuche) vorteilhafterweise eine Standzeit bei der Herstellung von schäumbaren Reaktionsmischungen von mindestens acht Stunden, ohne dass eine Reinigung notwendig. Wie oben bereits erwähnt, beträgt die Standzeit bei einer entsprechenden Vorrichtung gemäß Stand der Technik ohne Gasbeladung oder einer Gasbeladung auf der Niederdruckseite bei der Herstellung von schäumbaren Reaktionsmischungen unter ansonsten gleichen Bedingungen nur weniger als eine Stunde. Weitere Vorteile der Vorrichtung und des Verfahrens gemäß der vorliegenden Erfindung sind, dass kein Material zu Beginn des Verfahrens verworfen werden muß, da die Gasbeladung an den Auftragspunkten unmittelbar erreicht wird.

Vorteilhaft ist das inerte Gas ausgewählt aus der Gruppe von Luft, Stickstoff, Kohlendioxid und Edelgasen wie Argon und Helium. Bevorzugt wird Luft als chemisch inertes Gas eingesetzt.

Der oder die Statikmischer dienen dabei der innigen Vermischung der jeweiligen Komponente mit dem unter erhöhtem Druck stehenden inerten Gas. Nach dem Eintrag des inerten Gases weisen die Komponenten auf ihrem Weg zum Misch-/Verteilerkopf einen erhöhten Druck auf, was eine erhöhte Austragsgeschwindigkeit der schäumbaren Reaktionsmischung bedingt und dadurch eine erhöhte Produktionsgeschwindigkeit ermöglicht. Durch die Erhöhung der Austragsgeschwindigkeit wird zusätzlich eine gleichmäßigere Oberfläche bei dem herzustellenden Schaumstoff erreicht. Darüber hinaus werden die oben genannten Produktqualitäten verbessert. Vorteilhaft ist es, wenn die Austrittleitungen der erfindungsgemäßen Hochdruckvorrichtung quer zur Ausströmrichtung der schäumbaren Reaktionsmischung an einem starren Gestell befestigt sind. Diese Art der Befestigung ist einfach und die Fixierung ist ebenfalls reproduzierbar für unterschiedliche Paneltypen. Der Druck im Misch-/Verteilerkopf entspricht dabei nicht dem Druck, der durch bekannte Vorrichtungen des Standes der Technik erzielt wird.

Vorteilhaft ist es, wenn bei der erfindungsgemäßen Hochdruckvorrichtung mindestens ein Statikmischer, insbesondere ein erster Statikmischer für die Komponente A und ein zweiter Statikmischer für die Komponente B, vor dem Mischkopf angeordnet ist/sind.

Durch eine solche Anordnung befinden sich beide Komponenten A und B bei Eintritt in den Mischkopf unter erhöhtem Druck, was eine innigere Vermischung beider Komponenten und damit eine homogenere Ausbildung des Schaumstoffes zur Folge hat.

Vorteilhaft ist es, wenn die Zuleitung für das inerte Gas bei der erfindungsgemäßen Hochdruckvorrichtung im Bereich des Statikmischers in den in den Statikmischer eintretenden Strom der Komponente A und/oder der Komponente B mündet.

Dies bedingt eine gewisse Vorvermischung, die dann in direktem Anschluss durch den Statikmischer vervollständigt wird. Liegt der Ort des Eintrags des inerten Gases (räumlich) zu weit vom Statikmischer entfernt, besteht die Gefahr der Entmischung der Komponenten/des Gemisches und des inerten Gases auf dem Weg zum Statikmischer, welcher dieser nicht ausreichend auffangen könnte.

Vorteilhaft ist es, wenn bei der erfindungsgemäßen Hochdruckvorrichtung mindestens ein Statikmischer und mindestens eine Mess-/Regeleinrichtung am Gestell befestigt sind.

Durch diese Anordnung kann die erfindungsgemäße Vorrichtung sehr platzsparend ausgelegt werden.

Vorteilhaft ist es, wenn die erfindungsgemäße Hochdruckvorrichtung mindestens einen Wärmetauscher, insbesondere einen Hochdruckwärmetauscher, zur Einstellung der Temperatur der Komponente A und/oder der Komponente B umfasst. Die Druckbeaufschlagung allein würde die Komponente(n)/das Gemisch zu stark aufheizen.

Vorteilhaft ist es, wenn die erfindungsgemäße Hochdruckvorrichtung mindestens 4 am Verteilerkopf angebrachte, gleichlange und aus gleichem Material bestehende Austrittleitungen gleichen Querschnitts umfasst.

Vorteilhaft ist die erfindungsgemäße Hochdruckvorrichtung, wenn die Austrittleitungen der Panelgeometrie angepasst positioniert sind und das auslaufende Reaktionsgemisch über die gesamte Breite einer unteren Deckschicht gleichmäßig verteilt wird.

In einer zweiten Ausführungsform wird die der Erfindung zugrunde liegende Aufgabe gelöst durch ein Verfahren zur Herstellung von aufschäumenden Schäumen durch Einsatz einer erfindungsgemäßen Hochdruckvorrichtung.

Vorzugsweise setzt man als Komponente B eine Isocyanat-Komponente ein. Als Komponente A setzt man bevorzugt eine Polyol-Komponente ein. In diesem Zusammenhang schließen die Begriffe "Isocyanat-Komponente" bzw. "Polyol-Komponente" auch Gemische verschiedener Isocynate bzw. Polyole mit ein.

Bevorzugt führt man das Verfahren so durch, dass man das inerte Gas vor der Einleitung in die Komponente A, die Komponente B und/oder das Gemisch der Komponenten A und B auf einen Druck von > 150 bar komprimiert. Das Gas muss dabei immer einen höheren Druck haben als die Komponente, in die es eingegeben wird. Ein Druckunterschied von 10 bar zwischen dem inerten Gas und den Komponenten ist jeweils ausreichend.

Bevorzugt befestigt man bei dem erfindungsgemäßen Verfahren die Austrittleitungen so an dem Gestell, dass die von der ausströmenden schäumbaren Reaktionsmischung nicht benetzten Flächen einer zu bedeckenden Fläche gleich groß sind.

Bevorzugt befestigt man bei dem erfindungsgemäßen Verfahren die Austrittleitungen so an dem Gestell, dass die ausströmende schäumbare Reaktionsmischung nicht über die gesamte Breite einer zu bedeckenden Fläche gleichmäßig verteilt ist.

Bevorzugt befestigt man bei dem erfindungsgemäßen Verfahren die Austrittleitungen so an dem Gestell, dass die ausströmende schäumbare Reaktionsmischung in eine Förderrichtung eines Reaktionsbandes auf eine untere Deckschicht aufgetragen wird.

Bevorzugt befestigt man bei dem erfindungsgemäßen Verfahren die Austrittleitungen so an dem Gestell, dass die ausströmende schäumbare Reaktionsmischung gegen eine Förderrichtung eines Reaktionsbandes auf eine untere Deckschicht aufgetragen wird.

In einer dritten Ausführungsform wird die der Erfindung zugrunde liegende Aufgabe gelöst durch eine Vorrichtung zur Herstellung von Sandwich-Verbundelementen umfassend wenigstens zwei Zuführvorrichtungen für jeweils eine obere und eine untere Deckschicht, ein umlaufendes Oberband zur Führung der oberen Deckschicht und ein umlaufendes Unterband zur Führung der unteren Deckschicht, an die eine erfindungsgemäße Hochdruckvorrichtung, eine Formstrecke und eine Ablängevorrichtung hintereinander angeordnet sind.

In einer vierten Ausführungsform wird die der Erfindung zugrundeliegende Aufgabe gelöst durch ein Verfahren zur Herstellung von geschäumten Sandwich-Verbundelementen, wobei man eine erfindungsgemäße Vorrichtung zur Herstellung von Sandwich-Verbundelementen einsetzt.

Bei der erfindungsgemäßen Hochdruckvorrichtung ist ebenfalls ein Mischkopf oberhalb der unteren Deckschicht an einem starren Gestell angebracht, so dass unterschiedliche Reaktionsprofile zur Herstellung von unterschiedlich dicken Produkten möglich sind. An den Mischkopf, in dem die einzelnen Verschäumungs-Komponenten zusammen gemischt werden, ist ein Verteilerkopf befestigt. Dieser Verteilerkopf besitzt beispielsweise wenigstens 3, maximal 8 Austrittleitungen, deren Länge, Querschnitt und Material bevorzugt alle gleich sind. Dies hat den Vorteil, dass das Schaumverhalten des noch flüssigen Reaktionsgemisches beim Auftreffen auf die untere Deckschicht an jedem Auftreffpunkt gleich weit fortgeschritten ist, was zu einer besonders einheitlichen Verschäumung des hergestellten Produktes führt. Dieser Vorteil wird nicht nur durch die gleiche Länge, Querschnitt und Material der Austrittleitungen begünstigt, sondern auch dadurch, dass das gesamte aufzutragende Gemisch aus ein und demselben Mischkopf austritt. Als Austrittleitung kann jedes dem Fachmann bekannte Material genutzt werden, das nicht mit dem zu schäumendem Reaktionsgemisch reagiert und an dem das Reaktionsgemisch nicht unverhältnismässig stark haftet. Bevorzugt ist das Material der Austrittleitung ausgewählt aus der Gruppe von Stahl, Aluminium, Edelstahl, Polyethylen (PE), Polypropylen (PP), Polyvinylchlorid (PVC), Polyethylenterephthalat (PET), Kautschuk, Polytetrafluorethylen (PTFE) und Polyurethan (PU). Als Kautschuk ist jeder dem Fachmann bekannte in Zuleitungen verarbeitbare flexible Kautschuk zu verstehen, bevorzugt ist Nitril-Butadien-Kautschuk (NBR). Besonders bevorzugt ist ein biegsames Material ausgewählt aus der Gruppe von PE, PP, PET und PVC. Die Austrittleitungen sind an einem in Querrichtung zur Förderrichtung des Transportbandes über der oberen Deckschicht angeordneten, starren Gestell so angeordnet und fixiert, dass sie der Panelgeometrie angepasst sind und ein über die Breite der unteren Deckschicht gleichmäßiger Auftrag gewährleistet ist. Vorteilhaft sind die Austrittleitungen über der unteren Deckschicht angeordnet, dass das Reaktionsgemisch auf die untere Deckschicht aufgebracht wird, dass die nicht benetzten Bereiche zwischen den einzelnen Auftragsbereichen auf der unteren Deckschicht gleich groß sind. Während des Ausschäumens schließen sich die Lücken, so dass ein gleichmäßiges Ausschäumen der Verbundelemente gewährleistet ist. Zur Feinjustierung sind die Austrittleitungen an dem starren Gestell in Querrichtung zur Förderrichtung des Transportbandes verschiebbar. Ebenfalls ist das starre Gestell auch höhenverschiebbar. Des Weiteren sind die Austrittleitungen an dem Gestell so angebracht, dass das Reaktionsgemisch entweder in oder gegen Förderrichtung des Transportbandes auf die untere Deckschicht auftrifft. Ob das Reaktionsgemisch in oder gegen die Förderrichtung des Transportbandes auf die untere Deckschicht auftritt, ist von der Austragsgeschwindigkeit aus den Austrittleitungen und von der Fördergeschwindigkeit des Transportbandes und gegebenenfalls von der Viskosität des Reaktionsgemisches abhängig. Bei einer Austragsgeschwindigkeit von 1,2 bis 2 m/min und einer Fördergeschwindigkeit von 20 bis 60 m/min ist es vorteilhaft, wenn der Auftrag des Reaktionsgemisches gegen die Förderrichtung erfolgt. Bei einer Austragsgeschwindigkeit von 1,2 bis 2 m/min und einer Fördergeschwindigkeit bis zu 20 m/min ist ein Auftrag in Förderrichtung des Transportbandes vorteilhaft.

Ein gegenläufiger Auftrag ist bevorzugt bei kleinen Austragsmengen und hohen Produktionsgeschwindigkeiten. Die Relativgeschwindigkeit des Gemisches zur Deckschicht ist bei gegenläufigem Auftrag höher und ergibt einen etwas breiteren Auftrag der einzelnen Stränge.

In einer besonderen Ausführung kann der Mischkopf als auch der Verteilerkopf samt der Austrittleitungen so angeordnet und fixiert werden, dass auch Produkte mit einer in Querrichtung zur Förderrichtung des Transportbandes abfallenden Dicke oder mit sich ständig ändernden Dickenverhältnissen hergestellt werden können, wobei die nicht benetzten Bereiche zwischen den einzelnen Auftragsbereichen auf der unteren Deckschicht linear abnehmend oder immer unterschiedlich groß sein können. Während des Ausschäumens schließen sich diese Lücken, so dass ein in gewünschter Weise unregelmäßiges Ausschäumen in der Höhe der Produkte ermöglicht wird.

Durch diese Art der Anordnung kann auf ein Portal wie es bei der oszillierenden Gießharke bzw. Zungen-/Löffeldüse zwingend notwendig ist, verzichtet werden. Des Weiteren sind mit dieser Anordnung die Produktionsgeschwindigkeiten nur noch von der Geschwindigkeit des Transportbandes oder der Austragsleistung der Verschäumungsmaschine abhängig. Geschwindigkeiten von grösser 60 m/min können mit dieser Anordnung erreicht werden. Ein weiterer Vorteil dieser erfindungsgemäßen Vorrichtung gegenüber Verfahren, die mehrere Mischköpfe einsetzen müssen, ist der, dass durch die Verwendung von nur einem Mischkopf keine Schwankungen durch unterschiedliche Verarbeitungsdrücke, Temperaturen, oder ähnliches, wodurch die Produktionssicherheit und Produktqualität erniedrigt wird, auftreten können.

Als Mischkopf für die erfindungsgemäße Vorrichtung können alle im Stand der Technik bekannten Mischköpfe eingesetzt werden. Diese müssen jedoch zur Verschäumung insbesondere von Polyolkomponente und Isocyanatkomponente für die Herstellung von Polyurethan-Sandwich-Verbundelementen geeignet sein. Das chemisch inerte Gas kann dem Reaktionsgemisch im Mischkopf oder einer oder beiden Reaktionskomponenten bereits vorher zugemischt werden, um eine mögliche Verstopfung der Austrittleitungen zu verhindern. Das chemisch inerte Gas ist ausgewählt aus der Gruppe von Stickstoff, Luft, Kohlendioxid und Edelgasen wie Argon und Helium. Anstatt eines Gases können auch andere Bestandteile den Reaktionskomponenten hinzugemischt werden. Diese Stoffe sind beispielhaft ausgewählt aus der Gruppe von Graphit, Polyurethanmehl, Melamin, Quarzsand, Al₂O₃, Talkum und Nanokomposite wie beispielsweise Schichtsilicate, Nanotubes, Nanosand und werden den Reaktionskomponenten insbesondere im Mischkopf zugegeben.

Das Material des Verteilerkopfes kann ausgewählt sein aus Stahl, Edelstahl, Aluminium und Kunststoffen. In jedem Fall muss dass ausgewählte Material den im Mischkopf herrschenden Drücken und Temperaturen im Bereich von maximal 320 bar und 20 bis 40 °C standhalten.

Die Geometrie des Verteilerkopfes ist bevorzugt so gewählt, dass die Wegstrecke vom Eingang des Verteilers bis zu den jeweiligen Ausgängen zu den Austrittleitungen gleichlang ist. Des Weiteren ist es vorteilhaft, wenn der Querschnitt der Verteilerkopfausgänge bei allen Verteilerkopfausgängen identisch ist. Der Querschnitt des Verteilerkopfeingangs kann dagegen auch grösser sein als die jeweiligen Verteilerkopfausgänge.

Die erfindungsgemäße Auftragsvorrichtung kann Bestandteil einer weiteren Vorrichtung sein, die zur Herstellung von Sandwich-Verbundelementen eingesetzt wird. Die Herstellung von Polyurethan-Sandwichelementen (Panels) erfolgt im Allgemeinen in einem kontinuierlichen Prozess. Dabei werden die Panels endlos auf so genannten Doppel-Transportbändern in Dicken von in der Regel ca. 20 bis 240 mm hergestellt. Dicken von unter 20 mm und über 240 mm sind aber ebenfalls möglich. Ein solches Doppel-Transportband besteht dabei üblicherweise aus einem umlaufenden Oberband zur Führung der oberen Deckschicht, einem umlaufenden Unterband zur Führung der unteren Deckschicht, einer Zuführeinrichtung für die obere Deckschicht, einer Zuführeinrichtung für die untere Deckschicht, einer Formstrecke, innerhalb derer das Polyurethan-Reaktionsgemisch zwischen der oberen Deckschicht und der unteren Deckschicht aufschäumt und ausreagiert, einer Ablängeinrichtung für das hergestellte Panel sowie einer Dosierstation mit einem Mischkopf zum Auftragen der Polyurethan-Reaktionsmischung auf die untere Deckschicht.

Die Anordnung der einzelnen Elemente für ein kontinuierliches Herstellungsverfahren für Sandwich-Verbundelemente ist aus dem Stand der Technik, wie in DE 1 247 612 A1 und DE 1 609 668 A1 beschrieben, bekannt.

Im Rahmen der vorliegenden Erfindung wird unter einem Sandwich-Verbundelement ein Verbundelement verstanden, welches wenigstens aus zwei Deckschichten und einer dazwischen liegenden Kernschicht aufgebaut ist.

Als Kernschicht können alle dem Fachmann bekannten Materialien eingesetzt werden. Bevorzugt sind Faserplatten aus Mineralfasern oder Platten aus Hartschaumstoff, wie beispielsweise Polyurethan- oder Polyisocyanurat (PIR)-Hartschaumstoff, Polystyrolschaumstoff, Phenolharzschaumstoff.

Im Besonderen bestehen Sandwich-Verbundelemente wenigstens aus zwei Deckschichten aus starren oder flexiblen Material und einer Kernschicht aus einem Schaumstoff wie beispielsweise einem PUR-Hartschaumstoff. Hierbei sind unter PUR Hartschaumstoffe solche Hartschaumstoffe zu verstehen, die auf Polyurethan-, Polyharnstoff- als auch Polyisocyanuratverbindungen basieren.

Als Kernschicht werden bevorzugt Hartschaumstoffe, auf Basis von Polyurethan und/oder Polyisocyanurat, gewählt. Zur Herstellung von Polyurethan- und/oder Polyisocyanuratgruppen aufweisenden Hartschaumstoffen können als Ausgangskomponenten alle dem Fachmann bekannten Verbindungen mit gegenüber OH-Verbindungen reaktiven NCO-haltigen Verbindungen wie a) aliphatischen, cycloaliphatischen, araliphatischen, aromatischen und heterocyclischen Polyisocyanate, bevorzugt Diphenylmethandiisocyanat (MDI) oder Polyphenylpolymethylenpolyisocyanate, Carbodiimidgruppen, Urethangruppen, Allophanatgruppen, Isocyanuratgruppen, Harnstoffgruppen oder Biuretgruppen aufweisende Polyisocyanate, besonders bevorzugt auf der Basis von Polyphenylpolymethylenpolyisocyanat und b) Verbindungen mit mindestens zwei gegenüber Isocyanaten reaktiven Wasserstoffatomen mit einem Molekulargewicht im Bereich von 400 bis 10.000 g/mol, wie beispielsweise Aminogruppen, Thiolgruppen, Hydroxylgruppen oder Carboxylgruppen aufweisende Verbindungen eingesetzt werden. Darüber hinaus ist die Verwendung von geeigneten NCO-Präpolymeren, hergestellt aus der Umsetzung von polymerem MDI mit aliphatischen oder aromatischen Polyetherpolyolen oder Polyesterpolyolen, beispielsweise 1 bis 4 Hydroxylgruppen aufweisenden Polyetherpolyolen oder Polyesterpolyolen mit einem zahlenmittleren Molekulargewicht von 60 bis 4000 möglich.

Die Herstellung der Schaumstoffe erfolgt unter Verwendung von üblichen, dem Fachmann bekannten Hilfs- und Zusatzstoffen wie Katalysatoren, Treibmitteln, Vernetzern, Flammschutzmitteln Schaumstabilisatoren, Fließverbesserern, Inhibitoren, sowie gegebenenfalls festen Additiven zur Verbesserung der Wärmeleitfähigkeit und des Flammschutzes.

Als Materialien für die Deckschichten können alle dem Fachmann bekannten Materialien eingesetzt werden. Bevorzugt sind Metalle wie Stahl (verzinkt und/oder lackiert), Aluminium (lackiert und/oder eloxiert), Kupfer, Edelstahl oder Nichtmetalle wie verstärkte, unverstärkte und/oder gefüllte Kunststoffe, wie beispielsweise Polyvinylchlorid oder auf Polyesterbasis oder Glasfasern, imprägnierte Pappe, Papier, Holz, Bitumenglasvlies und mineralisches Glasvlies.

Beispielsweise können die Deckschichten mit einem Lack beschichtet sein.

Auch Kombinationen der Deckschichten auf den jeweiligen Seiten des hergestellten Panels aus den zuvor genannten Werkstoffen sind als Deckschichten geeignet.

Derartige Verbundelemente auf Basis von unterschiedlichen Deckschichten (starr oder flexibel) und einer Kernschicht aus Polyurethan-Hartschaumstoff sind aus dem Stand der Technik hinlänglich bekannt und werden auch als Metallverbundelemente oder Dämmplatte bezeichnet. Zwischen der Kernschicht und den Deckschichten können weitere Schichten vorgesehen sein.

Beispiele für die Anwendung solcher Verbundelemente mit starren Deckschichten sind ebene oder linierte Wandelemente sowie profilierte Dachelemente für den Industriehallenbau und Kühlhausbau. Auch finden die Verbundelemente als LKW-Aufbauten, Hallentüren und Tore sowie im Containerbau Einsatz. Dämmplatten sowie Verbundelemente mit flexiblen Deckschichten finden Einsatz als Dämmmaterialien von Dächern, Aussenwänden und als Fussbodenplatten.

Die Herstellung dieser Verbundelemente nach einem kontinuierlichen oder diskontinuierlichen Verfahren ist aus dem Stand der Technik hinlänglich bekannt. Hierfür wird das noch flüssige Reaktionsgemisch auf die untere Deckschicht mittels der erfindungsgemäßen Hochdruckvorrichtung aufgetragen. Das nun langsam aufschäumende Reaktionsgemisch wird auf der unteren Deckschicht mittels eines Unterbandes in die Formstrecke, die von einem Ober- und Unterband aufgespannt wird, transportiert. Das aufschäumende Reaktionsgemisch erreicht die obere Deckschicht und verklebt somit die beiden Deckschichten miteinander. Innerhalb der Formstrecke, wobei das Ober- und Unterband die Dicke des herzustellenden Produktes vorgibt, verfestigt sich der Schaum und wird nach Durchlauf durch die Formstrecke über eine Ablängvorrichtung, zum Schneiden der so hergestellten Panels in gewünschte Längen, abgelängt.

Nachfolgend wird die Erfindung anhand der beigefügten Zeichnungen näher erläutert.

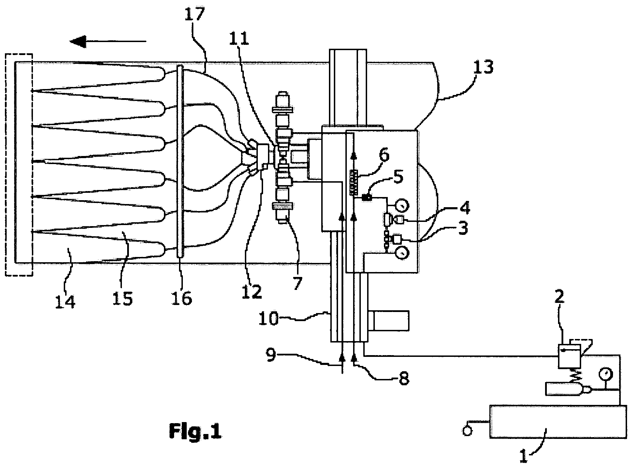

Fig. 1 zeigt eine erfindungsgemäße Auftragsvorrichtung während des Auftragens eines noch flüssigen Reaktionsgemisches 14 auf eine untere Deckschicht 13. Die Auftragsvorrichtung umfasst einen Mischkopf 11, der oberhalb der unteren Deckschicht 13 angeordnet ist. Die Produktdüsen 7 dienen dem Eintrag der durch die Produktleitungen 8 für das Polyol bzw. 9 für das Isocyanat zugeführten Komponenten in den Mischkopf 11. An den Mischkopf 11 schließt sich ein Verteilerkopf 12 an, an dem sechs gleichlange und aus gleichem Material bestehende Austrittleitungen 17 gleichen Durchmessers befestigt sind. Die Austrittleitungen 17 sind so über die gesamte Breite der unteren Deckschicht 13 an der Unterseite des quer zur Förderrichtung verlaufenden Gestells 16 befestigt, dass ein gleichmäßiger Auftrag auf die Deckschicht 13 in Förderrichtung des Transportbandes erfolgen kann. Das Gestell 16 ist starr über der unteren Deckschicht 13 angeordnet. Zur Feinjustage können die Austrittleitungen 17 ihre Position am Gestell 16 quer zur Förderrichtung verändern (nicht dargestellt). Über den Kompressor 1 wird das inerte Gas (zum Beispiel Luft) auf einen Druck von beispielsweise 180 bar komprimiert. Durch den Druckminderer 2 kann anschließend eine Regulierung auf einen geringeren Druck, beispielsweise 150 bar, erfolgen. In der dargestellten Ausführungsform sind die Mess-/Regeleinrichtung 4, das Auf-Zu-Ventil 3, das Rückschlagventil 5 und der Statikmischer 6 an dem zweiten Gestellbauteil 10 (auch Portal genannt) befestigt. Die in Fig. 1 dargestellte Ausführungsform sieht eine an die Panelgeometrie angepasste Anordnung der Austrittleitungen 17 an dem Gestell 16 vor, die es ermöglicht, dass das noch flüssige Reaktionsgemisch 14 so auf die untere Deckschicht 13 auftrifft, dass die nicht bedeckten Flächen 15 der unteren Deckschicht 13 zwischen den bedeckten Flächen gleich groß sind, um ein gleichmäßiges Aufschäumen über die gesamte Breite der Deckschicht 13 zu gewährleisten. Während des weiteren Aufschäumens des flüssigen Reaktionsgemisches 14 werden so die Lücken 15 gleichmäßig geschlossen. In einer weiteren Ausführungsform können die Austrittleitungen 17 an dem Gestell 16 auch so angebracht sein, dass der Auftrag des Reaktionsgemisches auf die untere Deckschicht 13 gegen die Förderrichtung des Transportbandes erfolgen kann. In einer weiteren Ausführungsform können die Austrittleitungen 17 an dem Gestell 16 auch so angeordnet sein, dass sich die Dicke des jeweilig hergestellten Schaumstoffes quer zur Förderrichtung des Transportbandes verändert.

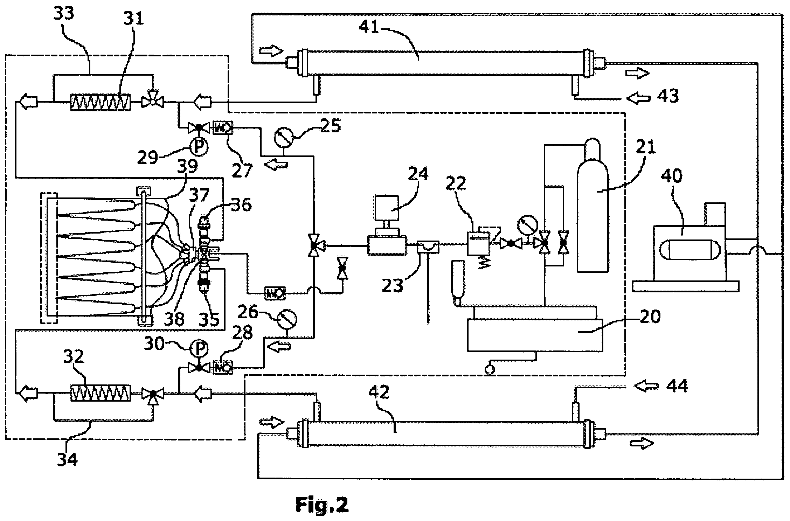

In Fig. 2 ist ein detaillierterer Plan einer Ausführungsform gemäß der vorliegenden Erfindung dargestellt. Die bei 43 bzw. 44 eintretenden Komponenten werden zunächst durch die Hochdruckwärmetauscher 41 bzw. 42 vorgekühlt. Neben den Hochdruckwärmetauschern 41 bzw. 42 gehört ebenfalls noch ein Kühlaggregat 40 zum Kühl(mittel)-kreislauf. Die beiden Komponenten treten dann in die Statikmischer 31 bzw. 32, welche jeweils mit Bypässen 33 bzw. 34 versehen sind, ein, um darin mit dem unter erhöhtem Druck stehenden inerten Gas vermischt zu werden. Über die Produktdüsen 35 bzw. 36 werden sie in den Mischkopf 38 eingebracht. Das resultierende Gemisch, das heißt der aufschäumende Schaum, durchströmt sodann den Verteilerkopf 37 und sechs Austrittöffnungen, um auf die untere Deckschicht 39 aufgetragen zu werden. Das komprimierte inerte Gas wird entweder über den Kompressor 20 und/oder über die Gasflasche(n) 21 bereitgestellt. Der Druckminderer 22 vermindert den Druck wenn nötig auf für die Hochdruckvorrichtung annehmbare Werte herab. Für den Notfall ist eine Berstscheibe 23 vorgesehen, um eine Beschädigung der strömungstechnisch dahinter angebrachten Bauteile zu vermeiden. Über die Messeinheit 24, die Mannometer 25 und 26, die Rückschlagventile 27 und 28 sowie die Rückschlagventile 29 und 30 erfolgt schließlich eine Steuerung der Menge des inerten Gases, welche in den jeweiligen Komponentenstrom eingetragen wird.

## Patentansprüche

1. Hochdruckvorrichtung zum Auftrag von schäumbaren Reaktionsmischungen umfassend
- einen Mischkopf (11,38),
- einen strömungstechnisch hinter dem Mischkopf (11,38) liegenden Verteilerkopf (12,37),
- mindestens drei an dem Verteilerkopf (12,37) angebrachte Austrittleitungen (17),
- eine Zuleitung (8,43) einer Komponente A zum Mischkopf (11,38),
- eine Zuleitung (9,44) einer Komponente B zum Mischkopf (11,38),
- mindestens eine Zuleitung (5, 27 - 30) für ein unter erhöhtem Druck stehendes inertes Gas (1, 21), wobei das inerte Gas vor der Einleitung in die Komponente A oder die Komponente B auf einen Druck von > 150 bar komprimiert wird und einen Druck aufweist, der höher ist als der Druck der Komponente, in die es eingegeben wird,
- mindestens einen Statikmischer (6, 31 ,32), der strömungstechnisch vor dem Mischkopf angeordnet ist, zur innigen Durchmischung des unter erhöhtem Druck stehenden inerten Gases und der jeweiligen Komponente,
- mindestens eine Mess- und Regeleinheit (4) zur Einstellung der gewünschten Drücke der Komponenten A und B am Mischkopf (11,38).

2. Vorrichtung nach Anspruch 1, **dadurch gekennzeichnet, dass** die Austrittleitungen quer zur Ausströmrichtung der schäumbaren Reaktionsmischung an einem starren Gestell befestigt sind.

3. Vorrichtung nach einem der Ansprüche 1 oder 2, **dadurch gekennzeichnet**, das Gesamtvolumen vom Statikmischer bis zum Mischkopf der erfindungsgemäßen Vorrichtung weniger als 2,0 dm³ beträgt.

4. Vorrichtung nach einem der Ansprüche 1 bis 3, **dadurch gekennzeichnet**, das Zuleitung für das inerte Gas im Bereich des Statikmischers in den in den Statikmischer eintretenden Strom der Komponente A und/oder der Komponente B mündet.

5. Verfahren zur Herstellung von schäumbaren Reaktionsmischungen durch Einsatz einer Vorrichtung nach einem der Ansprüche 1 bis 4.

6. Verfahren nach Anspruch 5, **dadurch gekennzeichnet, dass** man als Komponente A eine Isocyanat-Komponente einsetzt.

7. Verfahren nach einem der Ansprüche 5 oder 6, **dadurch gekennzeichnet, dass** man als Komponente B eine Polyol-Komponente einsetzt.

8. Verfahren nach einem der Ansprüche 5 bis 7, **dadurch gekennzeichnet, dass** man das inerte Gas vor der Einleitung in die Komponente A und/oder der Komponente B und/oder das Gemisch der Komponenten A und B mit Hilfe eines Kompressors (1, 20) auf einen Druck von > 150 bar komprimiert wird.

9. Verfahren nach einem der Ansprüche 5 bis 8, **dadurch gekennzeichnet, dass** man die Austrittleitungen so an dem Gestell befestigt, dass die von dem ausströmenden aufschäumenden Schaum nicht benetzten Flächen einer zu bedeckenden Fläche gleich groß sind.

10. Verfahren nach einem der Ansprüche 5 bis 8, **dadurch gekennzeichnet, dass** man die Austrittleitungen so an dem Gestell befestigt, dass die ausströmende einer schäumbare Reaktionsmischung nicht über die gesamte Breite einer zu bedeckenden Fläche gleichmäßig verteilt ist.

11. Verfahren nach einem der Ansprüche 5 bis 10, **dadurch gekennzeichnet, dass** man die Austrittleitungen so an dem Gestell befestigt, dass die ausströmende einer schäumbare Reaktionsmischung in eine Förderrichtung eines Reaktionsbandes auf eine untere Deckschicht aufgetragen wird.

12. Verfahren nach einem der Ansprüche 5 bis 10, **dadurch gekennzeichnet, dass** man die Austrittleitungen so an dem Gestell befestigt, dass die ausströmende schäumbare Reaktionsmischung gegen eine Förderrichtung eines Reaktionsbandes auf eine untere Deckschicht aufgetragen wird.

13. Vorrichtung zur Herstellung von Sandwich-Verbundelementen umfassend wenigstens zwei Zuführvorrichtungen für eine obere und eine untere Deckschicht, ein umlaufendes Oberband zur Führung der oberen Deckschicht und ein umlaufendes Unterband zur Führung der unteren Deckschicht, an die eine Vorrichtung nach einem der Ansprüche 1 bis 4, eine Formstrecke und eine Ablängevorrichtung hintereinander angeordnet sind.

14. Verfahren zur Herstellung von geschäumten Sandwich-Verbundelementen, wobei man eine Vorrichtung nach Anspruch 13 einsetzt.

## Claims

1. High-pressure device for applying expandable reaction mixtures comprising:
- a mixing head (11, 38),
- a distributor head (12, 37) lying fluidically downstream of the mixing head (11, 38),
- at least three outlet lines (17) attached to the distributor head (12, 37),
- a feed line (8, 43) for a component A to the mixing head (11, 38),
- a feed line (9, 44) for a component B to the mixing head (11, 38),
- at least one feed line (5, 27-30) for an inert gas (1, 21) under increased pressure, the inert gas being compressed to a pressure of > 150 bar before introduction into component A or component B and being at a pressure that is higher than the pressure of the component into which it is introduced,
- at least one static mixer (6, 31, 32), which is arranged fluidically upstream of the mixing head, for intimately mixing the inert gas under increased pressure and the respective component,
- at least one measurement and control unit (4) for setting the desired pressures of components A and B at the mixing head (11, 38).

2. Device according to Claim 1, **characterized in that** the outlet lines are fastened on a rigid frame transversely to the outflow direction of the expandable reaction mixture.

3. Device according to either of Claims 1 and 2, **characterized in that** the overall volume from the static mixer to the mixing head of the device according to the invention is less than 2.0 dm³.

4. Device according to one of Claims 1 to 3, **characterized in that** the feed line for the inert gas opens out in the region of the static mixer into the stream of component A and/or component B entering the static mixer.

5. Method for producing expandable reaction mixtures by using a device according to one of Claims 1 to 4.

6. Method according to Claim 5, **characterized in that** an isocyanate component is used as component A.

7. Method according to either of Claims 5 and 6, **characterized in that** a polyol component is used as component B.

8. Method according to one of Claims 5 to 7, **characterized in that** the inert gas is compressed to a pressure of > 150 bar before introduction into component A and/or component B and/or the mixture of components A and B is compressed to a pressure of > 150 bar with the aid of a compressor (1, 20).

9. Method according to one of Claims 5 to 8, **characterized in that** the outlet lines are fastened on the frame in such a way that the areas that are not wetted by the outflowing expanding foam are of the same size as an area to be covered.

10. Method according to one of Claims 5 to 8, **characterized in that** the outlet lines are fastened on the frame in such a way that the outflowing of an expandable reaction mixture is not evenly distributed over the overall width of an area to be covered.

11. Method according to one of Claims 5 to 10, **characterized in that** the outlet lines are fastened on the frame in such a way that the outflowing of an expandable reaction mixture is applied to a lower outer layer in a conveying direction of a reaction belt.

12. Method according to one of Claims 5 to 10, **characterized in that** the outlet lines are fastened on the frame in such a way that the outflowing expandable reaction mixture is applied to a lower outer layer counter to a conveying direction of a reaction belt.

13. Device for producing sandwich composite elements, comprising at least two feeding devices for an upper outer layer and a lower outer layer, a circulating upper belt for guiding the upper outer layer and a circulating lower belt for guiding the lower outer layer, on which a device according to one of Claims 1 to 4, a shaping section and a cutting-to-length device are arranged one behind the other.

14. Method for producing expanded sandwich composite elements, using a device according to Claim 13.

## Revendications

1. Dispositif à haute pression destiné à appliquer des mélanges réactifs expansibles, comprenant
- une tête de mélange (11, 38),
- une tête de distribution (12, 37) qui se trouve en circulation fluidique derrière la tête de mélange (11, 38),
- au moins trois conduites de sortie (17) montées sur la tête de distribution (12, 37),
- une conduite d'arrivée (8, 43) d'une composante A vers la tête de mélange (11, 38),
- une conduite d'arrivée (9, 44) d'une composante B vers la tête de mélange (11, 38),
- au moins une conduite d'arrivée (5, 27 - 30) pour un gaz (1, 21) inerte qui se trouve sous haute pression, le gaz inerte étant comprimé à une pression > 150 bars avant l'injection dans la composante A ou la composante B et présentant une pression qui est supérieure à la pression de la composante dans laquelle il est incorporé,
- au moins un mélangeur statique (6, 31, 32) qui est disposé en circulation fluidique avant la tête de mélange, servant au mélange intime du gaz inerte, qui se trouve sous haute pression, et de la composante respective,
- au moins une unité de mesure et de régulation (4) destinée à régler les pressions souhaitées des composantes A et B au niveau de la tête de mélange (11, 38) .

2. Dispositif selon la revendication 1, **caractérisé en ce que** les conduites de sortie sont fixées transversalement au sens de l'éjection du mélange réactif expansible à un bâti rigide.

3. Dispositif selon l'une des revendications 1 ou 2, **caractérisé en ce que** le volume total du mélangeur statique jusqu'à la tête de mélange du dispositif selon l'invention est inférieur à 2,0 dm³.

4. Dispositif selon l'une des revendications 1 à 3, **caractérisé en ce que** la conduite d'arrivée pour le gaz inerte dans la zone du mélangeur statique débouche dans le courant de la composante A et/ou de la composante B qui pénètre dans le mélangeur statique.

5. Procédé de fabrication de mélanges réactifs expansibles en utilisant un dispositif selon l'une des revendications 1 à 4.

6. Procédé selon la revendication 5, **caractérisé en ce que** la composante A utilisée est une composante à base d'isocyanate.

7. Procédé selon l'une des revendications 5 ou 6, **caractérisé en ce que** la composante B utilisée est une composante à base de polyol.

8. Procédé selon l'une des revendications 5 à 7, **caractérisé en ce que** le gaz inerte, avant l'injection dans la composante A et/ou la composante B et/ou le mélange des composantes A et B est comprimé à l'aide d'un compresseur (1, 20) à une pression > 150 bars.

9. Procédé selon l'une des revendications 5 à 8, **caractérisé en ce que** les conduites de sortie sont fixées au bâti de telle sorte que les surfaces non arrosées par la mousse éjectée qui s'expanse sont de la même taille qu'une surface à recouvrir.

10. Procédé selon l'une des revendications 5 à 8, **caractérisé en ce que** les conduites de sortie sont fixées au bâti de telle sorte que le éjecté d'un mélange réactif expansible n'est pas distribué de manière régulière sur toute la largeur d'une surface à recouvrir.

11. Procédé selon l'une des revendications 5 à 10, **caractérisé en ce que** les conduites de sortie sont fixées au bâti de telle sorte que le éjecté d'un mélange réactif expansible est appliqué sur une couche de recouvrement inférieure dans un sens de transport d'une bande de réaction.

12. Procédé selon l'une des revendications 5 à 10, **caractérisé en ce que** les conduites de sortie sont fixées au bâti de telle sorte que le mélange réactif expansible éjecté est appliqué sur une couche de recouvrement inférieure à l'opposé d'un sens de transport d'une bande de réaction.

13. Dispositif de fabrication d'éléments composites en sandwich, comprenant au moins deux dispositifs d'amenée pour une couche de recouvrement supérieure et inférieure, une bande supérieure circulaire destinée à guider la couche de recouvrement supérieure et une bande inférieure circulaire destinée à guider la couche de recouvrement inférieure, au niveau duquel sont disposés l'un derrière l'autre un dispositif selon l'une des revendications 1 à 4, un tronçon de façonnage et un dispositif de coupe à longueur.

14. Procédé de fabrication d'éléments composites en sandwich expansés, un dispositif selon la revendication 13 étant utilisé.
